# FASCICULE DE BREVET EUROPEEN

(11) **EP 2 042 246 B1**
(45) Date de publication et mention de la délivrance du brevet: **29.07.2015**
(21) Numéro de dépôt: 08165344.6
(22) Date de dépôt: 29.09.2008
(51) Int. Cl.: B09B 3/00

(54) **Procédé pour la détoxification et pour l'extraction des métaux de machefers et de cendres volantes issus de l'incinération**
Verfahren zur Entgiftung und Absaugung von Metallen, Schlacken und Flugasche, die bei der Verbrennung entstehen
Method for detoxifying and extracting metal from clinkers and airborne ash resulting from incineration

(30) Priorité: 28.09.2007 FR 0757935
(43) Date de publication de la demande: 01.04.2009
(73) Titulaire: LAB SA, 69007 Lyon (FR)
(72) Inventeur: Tabaries, Franck, 83190 Ollioules (FR); Siret, Bernard, 69200 Venissieux (FR)
(74) Mandataire: Myon, Gérard Jean-Pierre

(56) Documents cités:
- EP-A- 0 482 335
- WO-A-2005/040437
- FR-A- 2 696 955

## Description

La valorisation énergétique des déchets en incinération, qui est un moyen efficace de détruire les déchets, est une solution communément adoptée. Lors du processus d'incinération, les fumées produites sont toujours épurées et débarrassées de leurs polluants dangereux, comme les gaz acides, les métaux lourds ou les dioxines et furanes. Ces fumées contiennent aussi des composés particulaires, appelés cendres volantes, dont le caractère nocif est avéré et qui doivent être séparées.

En plus des fumées d'incinération, le processus d'incinération produit des résidus solides, à savoir les mâchefers et les cendres sous chaudière. Bien que la concentration en polluants dans ces solides soit moindre que dans les cendres volantes, on y trouve encore des quantités appréciables de métaux lourds, de sorte que la réutilisation de ces solides en tant que matériaux est limitée.

En général, plus la granulométrie du résidu est fine, plus il est riche en composés toxiques. C'est pourquoi les mâchefers, fraction grossière, trouvent assez facilement des débouchés après une période de maturation. En revanche les cendres volantes, très fines, ont concentré les toxiques et sont non seulement difficilement réutilisables, mais en plus doivent faire l'objet de précautions particulières avant une mise en décharge.

On a cherché à réduire l'impact sur l'environnement, ou la toxicité, par plusieurs manières. On peut chauffer les cendres volantes dans une atmosphère réductrice au-dessus de 600°C pour en dé truire les dioxines et furanes. On peut également chauffer les cendres volantes, les cendres sous chaudière et les mâchefers à une température d'au moins 1100°C, afin d'en provoquer la fusion et d'obtenir par vitrification une masse amorphe et inerte, éventuellement réutilisable. Ces procédés sont efficaces, mais tendent à volatiliser une partie des métaux lourds, de sorte que ces traitements postérieurs génèrent à leur tour des fumées qu'il faudra traiter.

On peut également chercher à réduire la toxicité de ces solides en réutilisant une extraction, par exemple par des eaux neutres, ou encore acides comme cela est décrit dans EP-A-0 381 601. Dans ce cas, les liqueurs ayant servi à l'extraction se chargent en métaux et il peut être économiquement intéressant de récupérer certains métaux, par exemple par électrolyse.

Toutefois, la concentration en métaux dépend fortement de la taille des particules, et le caractère fortement alcalin des solides oblige à neutraliser les eaux devant servir à l'extraction. On peut donc être amené à devoir traiter une quantité de solides telle, qu'une quantité d'acide excessivement importante est nécessaire. De plus, ces procédés d'extraction n'ont qu'une efficacité limitée sur l'élimination des polluants organiques adsorbés et très fortement liés aux solides, comme les dioxines et les furanes ou bien comme les composés polyaromatiques coplanaires.

FR 2 696 955 A propose un traitement des mâchefers et des cendres volantes comprenant une étape de lavage suivie d'une étape de séparation des résidus lavés et du liquide de lavage.

Des procédés qui éliminent une partie des polluants organiques ont été proposés, comme des séparations par flottation dans CH 696 425 A. Ceci ne règle cependant en rien l'extraction des métaux de ces résidus.

La présente invention vise à remédier à ces différents inconvénients.

A cet effet, elle a pour objet un procédé pour la détoxification et pour l'extraction des métaux de mâchefers et de cendres volantes, issus d'un four d'incinération, dans lequel :
a- on met un contact au moins une partie des cendres volantes, ainsi qu'une fraction de granulométrie la plus fine des mâchefers, cette fraction fine comprenant au moins 40% de la masse totale des mâchefers produits en aval du four d'incinération, avec une quantité d'eau comprise entre 150% et 400% de la masse totale des solides, pendant un temps de contact compris entre 2 et 20 minutes, de préférence compris entre 3 et 10 minutes ;
b- on introduit la suspension résultante dans une unité de séparation, de manière à séparer cette suspension en deux flux, à savoir un premier flux concentré en fines particules riches en carbone et en calcium, ainsi qu'en particules imbrûlées, et un second flux concentré en particules plus grosses, riches en silicates ;
c- on soumet le premier flux à une extraction acide dans un réacteur d'extraction, puis on dirige le flux résultant vers un séparateur solide/liquide ;
d- on alimente la fraction pauvre en solides, issue dudit séparateur solide/liquide, vers une unité de type réacteur agité, distincte du réacteur d'extraction ;
e- on soumet, dans ladite unité de type réacteur agité, le second flux à une extraction acide ; et
f- on alimente à un filtre le flux sortant de ladite unité de type réacteur agité.

Selon d'autres caractéristiques :
- l'extraction acide à laquelle est soumis le premier flux est plus poussée que l'extraction acide à laquelle est soumis le second flux ;
- on retourne au four d'incinération la fraction riche en solides issue du séparateur solide/liquide, afin de brûler cette fraction ;
- on ajoute légalement du gypse dans l'unité de type réacteur agité ;
- l'unité de séparation est une cellule de flottation dans laquelle on introduit des agents tensio-actifs, de type cationique, anionique ou non-ionique ;
- l'unité de séparation est une unité de type colonne d'élutriation ;
- on introduit de l'acide chlorhydrique ou sulfurique dans la colonne d'élutriation ;
- le séparateur liquide/solide est de type machine centrifuge.

Le procédé conforme à l'invention tire parti de l'inhomogénéité de composition des résidus solides, pour en assurer une valorisation maximale par extraction des métaux comme le zinc, tout en assurant une réduction poussée de la toxicité.

La fraction fine des mâchefers et les cendres sous chaudière sont tout d'abord mélangées avec les cendres volantes dans un réacteur agité avec de l'eau, pendant un temps n'excédant avantageusement pas 20 minutes. Puis, les boues obtenues sont introduites dans un séparateur qui tire parti de la forte dépendance de la composition en fonction de la taille pour séparer les solides en deux fractions. Il s'agit, d'une part, d'une fraction fine, riche en calcium et en métaux et également plus chargée en polluants organiques et, d'autre part, d'une fraction grossière, moins toxique, moins alcaline et plus riche en silicates et en alumino-silicates.

La fraction fine, riche en calcium, est ensuite soumise à une extraction acide dans un réacteur, dans le but d'en extraire certains métaux lourds et, en particulier, le zinc. Après cette extraction, les solides sont séparés dans une unité de type décanteur ou centrifugeuse et ces solides, qui ont été débarrassés de la majeure partie de leurs métaux, sont réintroduits au four d'incinération. La fraction liquide, qui contient les métaux, est mélangée à la fraction grossière issue du premier séparateur, et est introduite dans un réacteur où les solides sont mis en contact avec de l'acide chlorhydrique ou sulfurique. De manière optionnelle, du gypse, autre sous-produit usuel du traitement des fumées par voie humide par incinération, est ajouté.

Les bouillies ainsi obtenues, dont il est important de noter qu'elles ne contiennent plus beaucoup de particules fines très toxiques, sont introduites sur un filtre, par exemple de type filtre à bandes. Les filtrats riches en métaux peuvent alors être facilement soumis à un procédé connu de récupération des métaux. De plus les solides, dont la majeure partie des métaux a été extraite et dont la majeure partie des particules très fines chargées en polluants organiques a été séparée et réintroduite au four, présentent d'excellentes caractéristiques de mise en décharge vis à vis des tests de lixiviation, de percolation ou d'écotoxicité.

Il est important de remarquer que la séparation des boues permet une ségrégation entre les particules fines riches en calcium et en métaux, présentes en quantité limitée et, d'autre part, les particules plus grosses qui sont majoritaires. Or, ces dernières nécessitent une extraction acide moins poussée, ce qui permet de limiter sensiblement la quantité d'acide totale à utiliser pour l'extraction.

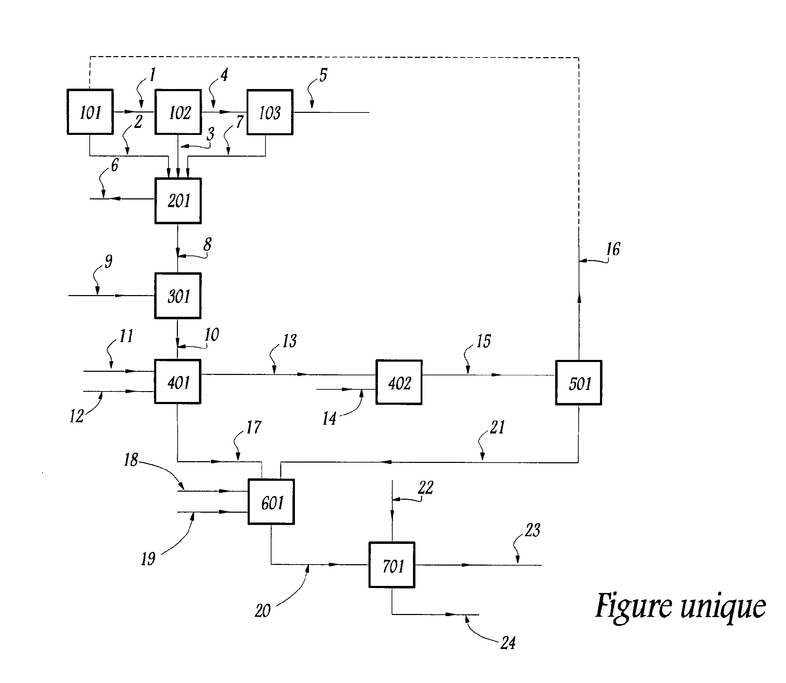

L'invention va être décrite ci-après, en référence aux dessins annexés, donnés à titre d'exemple non limitatif, dans lesquels la figure unique est une vue schématique, illustrant la mise en oeuvre d'un procédé conforme à l'invention.

Un four d'incinération 101 produit des fumées à épurer 1, qui sont introduites dans une chaudière 102, puis dans un électrofiltre ou un filtre 103 et ressortent de ce dernier par une ligne 5 pour aller vers un système d'épuration des fumées, de préférence de type humide et connu en soi. Les mâchefers 2, les cendres sous chaudière 3 et les cendres volantes 7 sont alimentés à une unité de séparation par la taille 201 de type connu, pouvant être par exemple un cribleur ou un tamis vibrant.

Cette séparation primaire permet d'isoler tout d'abord d'une part une fraction très grossière 6, qui représente au moins 60% de la masse totale des flux 2, 3 et 7. Cette fraction, qui est peu chargée en composés nocifs, est évacuée de manière non représentée.

D'autre part, on retrouve une fraction plus fine 8 qui est dirigée vers une unité 301 de contact solide liquide, qui a pour but de mettre en suspension les solides 8 dans de l'eau, introduite par la ligne 9. Cette unité 301 est, par exemple, un réacteur agité.

Selon l'invention, le temps de contact entre les solides et l'eau est compris entre 2 et 20 minutes et, de préférence, entre 3 et 10 minutes. Il est avantageux de ne pas mettre en contact les solides et les liquides pendant plus de 20 minutes, sans quoi l'étape de filtration finale par 701 se fait de manière non satisfaisante. La quantité d'eau représente en poids entre 150 et 400% du poids des résidus solides secs 8. D'une manière optionnelle et en variante, les cendres volantes 7 peuvent aller directement au contacteur 301 sans transiter par le séparateur de taille 201, décrit ci-dessus. La suspension 10 qui sort de ce réacteur est ensuite introduite dans un séparateur 401, qui tire parti de l'existence de deux populations de solides.

On retrouve ainsi, en aval de ce séparateur 401, un premier flux 13 qui correspond aux particules fines riches en carbone, en métaux lourds et en polluants organiques, ainsi qu'aux particules de plus grandes tailles qui sont imbrûlées. On retrouve également un second flux 17, qui correspond aux particules de plus grandes tailles, plus riches en silicate que celles du premier flux 13. Ainsi, ce séparateur 401 effectue une séparation qui est fonction non seulement de la taille des particules, mais également de la composition de ces particules.

Plusieurs technologies peuvent être utilisées pour cette opération de séparation. On peut, par exemple, utiliser une flottation par l'air 12 en ajoutant de préférence un surfactant par le flux 11, en vue de la séparation des particules imbrûlées.

On peut également utiliser un séparateur du type colonne d'élutriation dans laquelle la séparation se fait en exploitant la différence des vitesses de chute libre entre les fines particules et les plus grosses. Dans cette variante, on peut aussi introduire de l'acide chlorhydrique ou sulfurique pour aider à extraire les métaux lourds. Ceci a pour avantage supplémentaire que, le temps de contact des particules fines étant supérieur au temps de contact des particules plus grosses, un gradient de pH s'établit entre le haut et le bas de la colonne, résultat d'une réaction plus poussée de l'acide avec les fines particules qu'avec les grosses.

La première fraction 13 issue du séparateur 401 est alors introduite dans un réacteur d'extraction 402, dans lequel de l'acide chlorhydrique ou sulfurique 14 est alimenté en vue d'une opération d'extraction. On complète donc dans cette unité l'extraction des métaux lourds, et en particulier du zinc. La suspension 15 qui en résulte est traitée par un séparateur de type solide/liquide 501 qui est de manière avantageuse une centrifugeuse. D'autres technologies, connues en elles-mêmes, peuvent aussi être utilisées, comme par exemple des hydrocyclones.

Les solides sont donc concentrés dans un flux 16 qui est évacué ou bien, de préférence, réintroduit dans le four 101 pour y être rebrûlé, ce qui assure la destruction des polluants organiques. Cette possibilité est illustrée en traits pointillés. Le liquide clarifié 21, à savoir substantiellement dépourvu de solides, qui contient en particulier les métaux extraits, est dirigé vers un réacteur de mise en contact solide-liquide 601. De manière préférée ce réacteur est un réacteur de type réacteur agité.

D'un autre côté, le second flux 17 issu du séparateur 401 est soumis dans le réacteur 601 à une réaction d'extraction. De façon avantageuse, cette dernière extraction est moins poussée que celle, relative au premier flux 13, mise en oeuvre dans le réacteur 402. Ceci signifie que la consommation d'acide est moindre par masse de solide traitée. Du gypse 18 peut également être ajouté, de façon avantageuse.

Ce réacteur 601 reçoit également le flux 21 qui contient en particulier les métaux extraits de la fraction fine. De l'acide chlorhydrique ou sulfurique 19 est introduit dans ce réacteur, en vue de la mise en oeuvre de l'extraction acide du flux 17, évoquée ci-dessus. En aval du réacteur 601, on retrouve un flux 20 qui est dirigé vers une unité de filtration 701.

Cette unité de filtration 701 a pour but d'obtenir, d'une part, un gâteau de solides, et, d'autre part, des filtrats contenant en particulier les métaux extraits et le zinc que l'on peut souhaiter récupérer. Cette unité de filtration est, de manière préférée, un filtre à bandes. De l'eau 22 y est introduite pour le rinçage du gâteau et, de manière optionnelle non représentée sur le schéma, une solution acide pour parfaire le rinçage ou faciliter la filtration. Les filtrats 23 sont évacués et sont avantageusement traités en vue d'en récupérer les métaux dissous, comme le zinc, par une technique connue et non objet de la présente invention. Les gâteaux 24, contenant les solides débarrassés de leur fraction la plus toxique dans les réacteurs 501 et 601, ainsi que de leurs métaux extractibles, seront avantageusement mis en décharge.

Le procédé objet de la présente l'invention, poursuit donc un double objectif. Il s'agit tout d'abord d'obtenir une extraction des métaux valorisables 23, aussi complète que possible, tout en limitant la consommation d'acide pour atteindre cet effet technique. Il s'agit en outre d'obtenir un gâteau filtre de cendres 24, débarrassé de la majeure partie de ses composés organiques toxiques et des imbrûlés. En effet, certaines fractions, plus riches en calcium que d'autres, ont besoin comparativement de plus d'acide, lors de la mise en oeuvre de l'extraction du premier flux 13, et la séparation de ces fractions par 401 permet de réduire la quantité d'acide globale à utiliser. Ainsi, le second flux 17, qui nécessite moins d'acide, est traité spécifiquement dans la mise en oeuvre de l'extraction dans le réacteur agité 601, moins poussée que celle du réacteur 402 et par conséquent moins consommatrice d'acide.

Par ailleurs, les plus fines particules, riches en calcium et en polluants organiques et aussi plus riches en métaux, soumises à l'extraction acide en 402 pour en récupérer les métaux, sont avantageusement réintroduites dans le four d'incinération 101, ce qui assure la destruction de leurs polluants organiques, en particulier des dioxines des furanes et des polluants organiques persistants (POP). Il y a lieu de noter que si ces fines particules n'étaient pas soumises à l'extraction acide 402, leur recyclage au four conduirait à un tourne-en-rond de métaux préjudiciable à l'encrassement des chaudières et aussi à l'épuration des fumées issues de l'incinérateur. En d'autres termes, la présente invention permet de s'affranchir en grande partie du problème de la toxicité des cendres volantes, puisque la fraction la plus fine a été séparée des imbrûlés, sans pour autant conduire à un tourne-en-rond de métaux puisque ceux-ci sont extraits et pourront être avantageusement récupérés à partir du flux 23 pour une valorisation.

## Revendications

1. Procédé pour la détoxification et pour l'extraction des métaux de mâchefers et de cendres volantes, issus d'un four d'incinération (101), dans lequel :
a - on met en contact (en 301) au moins une partie des cendres volantes, ainsi qu'une fraction de granulométrie la plus fine des mâchefers, cette fraction fine comprenant au moins 40% de la masse totale des mâchefers produits en aval du four d'incinération, avec une quantité d'eau (9) comprise entre 150% et 400% de la masse totale des solides, pendant un temps de contact compris entre 2 et 20 minutes, de préférence compris entre 3 et 10 minutes ;
b - on introduit la suspension résultante (10) dans une unité de séparation (401), de manière à séparer cette suspension en deux flux, à savoir un premier flux (13) concentré en fines particules riches en carbone et en calcium, ainsi qu'en particules imbrûlées, et un second flux (17) concentré en particules plus grosses, riches en silicates ;
c - on soumet le premier flux (13) à une extraction acide dans un réacteur d'extraction (402), puis on dirige le flux résultant (15) vers un séparateur solide/liquide (501) ;
d - on alimente la fraction pauvre en solides (21), issue dudit séparateur solide/liquide (501), vers une unité de type réacteur agité (601), distincte du réacteur d'extraction (402) ;
e - on soumet, dans ladite unité de type réacteur agité (601), le second flux (17) à une extraction acide ; et
f - on alimente à un filtre (701) le flux (20) sortant de ladite unité de type réacteur agité (601).

2. Procédé selon la revendication 1, **caractérisé en ce que** l'extraction acide à laquelle est soumis le premier flux (13) est plus poussée que l'extraction acide à laquelle est soumis le second flux (17).

3. Procédé selon la revendication 1 ou 2, **caractérisé en ce qu'**on retourne au four d'incinération (101) la fraction riche en solides (16) issue du séparateur solide/liquide (501), afin de brûler cette fraction.

4. Procédé selon l'une des revendications précédentes, **caractérisé en ce qu'**on ajoute également du gypse (18) dans l'unité de type réacteur agité (601).

5. Procédé selon l'une des revendications précédentes, dans lequel l'unité de séparation (401) est une cellule de flottation dans laquelle on introduit des agents tensio-actifs, de type cationique, anionique ou non-ionique.

6. Procédé selon l'une des revendications 1 à 4, dans lequel l'unité de séparation est une unité de type colonne d'élutriation.

7. Procédé selon la revendication 6, dans lequel on introduit de l'acide chlorhydrique ou sulfurique dans la colonne d'élutriation.

8. Procédé selon l'une des revendications précédentes, dans lequel le séparateur liquide/solide (501) est de type machine centrifuge.

## Patentansprüche

1. Verfahren zur Entgiftung und zur Gewinnung von Metallen aus Schlacken und Flugaschen, die aus einem Verbrennungsofen (101) stammen, bei dem:
a - mindestens ein Teil der Flugaschen sowie die kleinste Korngrößenfraktion der Schlacken, wobei diese feine Fraktion mindestens 40% der stromabwärts zu dem Verbrennungsofen erzeugten Schlacken umfasst, mit einer Wassermenge (9), die zwischen 150% und 400% der Gesamtmasse der Feststoffe liegt, während einer Kontaktzeit zwischen 2 und 20 Minuten, vorzugsweise zwischen 3 und 10 Minuten in Kontakt gebracht werden;
b - die resultierende Suspension (10) in eine Trenneinheit (401) eingeführt wird, um diese Suspension in zwei Ströme zu trennen, nämlich einen ersten Strom (13) mit einer Konzentration an feinen Partikeln reich an Kohlenstoff und Kalzium sowie an nicht verbrannten Partikeln, und einen zweiten Strom (17) mit einer Konzentration an größeren Partikeln reich an Silikaten;
c - der erste Strom (13) in einem Extraktionsreaktor (402) einer Säureextraktion unterworfen wird, dann der resultierende Strom (15) zu einem Fest-Flüssig-Abscheider (501) geleitet wird;
d - die an Feststoffen arme Fraktion (21), die aus der Fest-Flüssig-Abscheider (501) stammt, einer Rührreaktoreinheit (601) zugeführt wird, die sich von dem Extraktionsreaktor (402) unterscheidet;
e - der zweite Strom (17) in der Rührreaktoreinheit (601) einer Säureextraktion unterworfen wird; und
f - der aus der Rührreaktoreinheit (601) austretende Strom (20) einem Filter (701) zugeführt wird.

2. Verfahren nach Anspruch 1, **dadurch gekennzeichnet, dass** die Säureextraktion, der der erste Strom (13) unterworfen wird, mehr gefördert wird, als die Säureextraktion, der der zweite Strom (17) unterworfen ist.

3. Verfahren nach Anspruch 1 oder 2, **dadurch gekennzeichnet, dass** die Fraktion (16) reich an Feststoffen, die aus dem Fest-Flüssig-Abscheider (501) stammt, dem Verbrennungsofen (101) rückgeführt wird, um diese Fraktion zu verbrennen.

4. Verfahren nach einem der vorhergehenden Ansprüche, **dadurch gekennzeichnet, dass** zusätzlich Gips (18) der Rührreaktoreinheit (601) zugeführt wird.

5. Verfahren nach einem der vorhergehenden Ansprüche, bei dem die Trenneinheit (401) eine Flotationszelle ist, in die kationische, anionische oder nichtionische Tenside eingeführt werden.

6. Verfahren nach einem der Ansprüche 1 bis 4, bei dem die Trenneinheit eine Sichtersäule ist.

7. Verfahren nach Anspruch 6, bei dem Chlorwassersäure oder Schwefelsäure in die Sichtersäule eingegeben wird.

8. Verfahren nach einem der vorhergehenden Ansprüche, bei dem die Fest-Flüssig-Abscheider (501) eine Zentrifuge ist.

## Claims

1. A method for detoxifying and extracting metals from clinker and fly ash originating from an incineration furnace (101), in which:
a - at least part of the fly ash, as well as a finest particle size fraction of the clinker, this fine fraction comprising at least 40% of the total mass of the clinker produced downstream of the incineration furnace, are brought into contact (at 301) with a quantity of water (9) of between 150% and 400% of the total mass of the solids, for a contact time of between 2 and 20 minutes, preferably of between 3 and 10 minutes;
b - the resultant suspension (10) is introduced into a separation unit (401), in such a way as to separate this suspension into two streams, namely a first stream (13) with a high concentration of fine carbon- and calcium-rich particles, as well as of uncombusted particles, and a second stream (17) with a high concentration of larger, silicate-rich particles;
c - the first stream (13) is subjected to acid extraction in an extraction reactor (402), then the resultant stream (15) is directed towards a solid/liquid separator (501);
d - the fraction with low solids content (21), originating from said solid/liquid separator (501), is fed towards a unit of the stirred reactor type (601), different from the extraction reactor (402);
e - in said unit of the stirred reactor type (601), the second stream (17) is subjected to acid extraction; and
f - the stream (20) leaving said unit of the stirred reactor type (601) is fed to a filter (701).

2. A method according to claim 1, **characterised in that** the acid extraction which the first stream (13) undergoes is more thorough than the acid extraction which the second stream (17) undergoes.

3. A method according to claim 1 or claim 2, **characterised in that** the solids-rich fraction (16) originating from the solid/liquid separator (501) is returned to the incineration furnace (101), in order to combust this fraction.

4. A method according to one of the preceding claims, **characterised in that** gypsum (18) is also added to the unit of the stirred reactor type (601).

5. A method according to one of the preceding claims, in which the separation unit (401) is a flotation cell into which surfactants of the cationic, anionic or non-ionic type are introduced.

6. A method according to one of claims 1 to 4, in which the separation unit is a unit of the elutriation column type.

7. A method according to claim 6, in which hydrochloric or sulfuric acid is introduced into the elutriation column.

8. A method according to one of the preceding claims, in which the liquid/solid separator (501) is of the centrifuge type.
